# EUROPEAN PATENT APPLICATION

(11) **EP 4 145 276 A1**
(43) Date of publication of application: **08.03.2023**
(21) Application number: 21829205.0
(22) Date of filing: 24.05.2021
(51) Int. Cl.: G06F 9/302

(54) **DATA PROCESSING APPARATUS AND DATA PROCESSING METHOD**

(30) Priority: 23.06.2020 CN 202010583752
(71) Applicant: Sanechips Technology Co., Ltd., Shenzhen, Guangdong 518055 (CN)
(72) Inventor: LIU, Huan, Shenzhen, Guangdong 518057 (CN); FENG, Liguo, Shenzhen, Guangdong 518057 (CN)
(74) Representative: Betten & Resch
(86) International application number: PCT/CN2021/095559
(87) International publication number: WO 2021/258954

(57) **Abstract**

A data processing apparatus and a data processing method. The apparatus comprises a configuration module (10), an input routing module (20), an interconnection routing module (30), and a plurality of multiply and accumulate unit modules (40); the configuration module (10) configures the other modules according to an input mathematical model; the input routing module (20) establishes input routings from input data channels to input interfaces of the multiply and accumulate unit modules according to a configuration; the interconnection routing module (30) establishes, according to a configuration, an interconnection routing from an output interface of a previous multiply and accumulate unit module to an input interface of a next multiply and accumulate unit module on the basis of serial number orders of the multiply and accumulate unit modules, so as to achieve unidirectional cascade of the plurality of multiply and accumulate unit modules (40); the multiply and accumulate unit modules acquire input data by means of the input routings and/or the interconnection routings and perform arithmetic operations on the input data according to a configuration.

## Description

### CROSS-REFERENCE TO RELATED APPLICATION

This application is filed on the basis of the Chinese patent application No. 202010583752.0 filed on June 23, 2020, and claims priority of the Chinese patent application, the entire contents of which are incorporated herein by reference.

### TECHNICAL FIELD

The present application relates to the field of data processing technologies, and in particular, to a data processing apparatus and a data processing method.

### BACKGROUND

A data model of multi-data arithmetic operations has the characteristics of massive data, large bit width and high throughput, and generally requires flexible and complex arithmetic operations on multiple pieces of data. Most of the operations in the data model are basic operations such as multiplication, addition and subtraction between data or between data and constants, as well as the conjugation of the data.

A Multiple Instruction Multiple Data (MIMD) processing apparatus may perform complex arithmetic operations on multiple pieces of input data. Interconnection routing between multiple arithmetic units in the MIMD processing apparatus is generally matrix interconnection, bus sharing or fully mapped routing. However, in terms of the matrix interconnection, there exists operational units for routing in which no practical operation is performed, leading to a waste of operation efficiency of the operational units. In terms of bus sharing, simultaneous transmission of multiple operational units is not possible, and data transmission efficiency between the operational units is low, reducing the speed of operation. In terms of the fully mapped routing, connection overhead and selector overhead between the operational units are relatively large. Therefore, the interconnection routing fails to strike a balance between the operation efficiency, the data transmission efficiency and interconnection overhead of the operational units.

### SUMMARY

According to some embodiments of the present application, a data processing apparatus and a data processing method are provided.

According to an aspect of the present application, there is provided a data processing apparatus, which includes, a configuration module, an input routing module, an interconnection routing module, and a plurality of multiply and accumulate unit (MAU) modules, the configuration module is configured to configure the input routing module, the interconnection routing module, and the plurality of MAU modules according to an input mathematical model, to correspondingly generate first configuration data, second configuration data, and third configuration data; the input routing module is configured to establish an input route from one of a plurality of input data channels of the data processing apparatus to an input interface of one of the plurality of MAU modules according to the first configuration data; the interconnection routing module is configured to establish, according to the second configuration data, an interconnection route from an output interface of a preceding MAU module in the plurality of MAU modules to an input interface of a subsequent MAU module, based on serial sorting numbers of the plurality of MAU modules, so as to achieve unidirectional cascade of the plurality of MAU modules; and the MAU module is configured to acquire input data of the MAU module through the input route and/or the interconnection route, and perform an arithmetic operation on the input data of the MAU module according to the third configuration data.

According to another aspect of the present application, there is provided a data processing method, which is performed by the data processing apparatus as described above, and includes, configuring, by the configuration module, the input routing module, the interconnection routing module, and the plurality of MAU modules according to an input mathematical model, to correspondingly generate first configuration data, second configuration data, and third configuration data; establishing, by the input routing module, an input route from one of the plurality of input data channels to an input interface of one of the plurality of MAU modules according to the first configuration data; establishing, by the interconnection routing module according to the second configuration data, an interconnection route from an output interface of a preceding MAU module in the plurality of MAU modules to an input interface of a subsequent MAU module based on serial sorting numbers of the plurality of MAU modules, so as to achieve unidirectional cascade of the plurality of MAU modules; receiving, by the input routing module, a plurality pieces of input data from the data processing apparatus; and acquiring, by the MAU module, input data of the MAU module based on the input route and/or the interconnection route, performing an arithmetic operation on the input data of the MAU module according to the third configuration data, and generating, by the MAU module with a last serial sorting number, a result of the arithmetic operation corresponding to the plurality pieces of input data.

### BRIEF DESCRIPTION OF DRAWINGS

FIG. 1 is a schematic diagram of a data processing apparatus according to an embodiment of the present application;
FIG. 2 is a schematic diagram of an MAU module according to an embodiment of the present application;
FIG. 3 is a schematic diagram of an input routing module according to an embodiment of the present application;
FIG. 4 is a schematic diagram of an interconnection routing of a 2^{nd} MAU module in an interconnection routing module according to an embodiment of the present application;
FIG. 5 is a schematic diagram of an interconnection routing of a 3^{rd} MAU module in an interconnection routing module according to an embodiment of the present application;
FIG. 6 is a schematic diagram of an interconnection routing of a 4^{th} MAU module in an interconnection routing module according to an embodiment of the present application;
FIG. 7 is a schematic diagram of an interconnection routing of an X^{th} MAU module in an interconnection routing module according to an embodiment of the present application; and
FIG. 8 is a flow chart of a data processing method according to an embodiment of the present application.

### DETAILED DESCRIPTION

It is to be understood that specific embodiments described herein are intended only to explain but not to limit the present application.

In subsequent descriptions, a suffix such as "module", "component", or "unit" used for representing an element is intended only for describing the present application, and does not have any particular meanings. Therefore, "module", "component" and "unit" are exchangeable.

Objects, technical schemes and advantages of the present application will become clearer from a detailed description of embodiments of the present application in conjunction with the drawings. It is to be noted that if not in collision, the embodiments and features in the embodiments in the present application may be combined with each other.

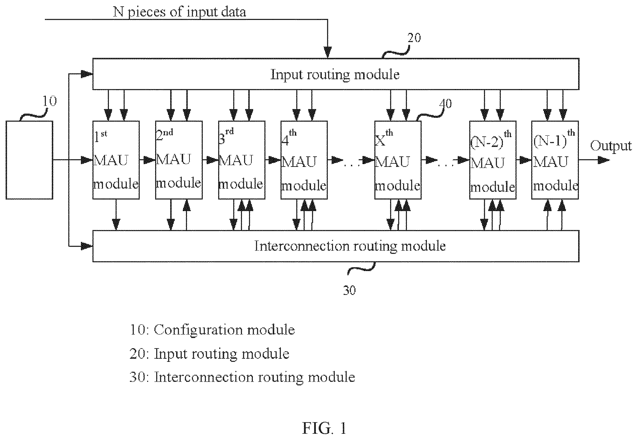

In an implementation, FIG. 1 is a schematic diagram of a data processing apparatus according to an embodiment of the present application. The apparatus is suitable for flexible and complex arithmetic operations on multiple pieces of input data. As shown in FIG. 1, the data processing apparatus according to the embodiment of the present application includes a configuration module 10, an input routing module 20, an interconnection routing module 30, and multiple MAU modules 40.

The configuration module 10 is configured to configure the input routing module 20, the interconnection routing module 30, and the multiple MAU modules 40 according to an input mathematical model, to correspondingly generate first configuration data, second configuration data, and third configuration data.

The input routing module 20 is configured to establish input routes from multiple input data channels of the data processing apparatus to input interfaces of the multiple MAU modules 40 according to the first configuration data.

The interconnection routing module 30 is configured to establish, according to the second configuration data, an interconnection route from an output interface of a preceding MAU module in the multiple MAU modules 40 to an input interface of a subsequent MAU module based on serial sorting numbers of the multiple MAU modules 40, so as to achieve unidirectional cascade of the multiple MAU modules.

The MAU module 40 is configured to acquire input data from the MAU module 40 through the input route and/or the interconnection route, and perform arithmetic operations on the input data form the MAU module 40 according to the third configuration data.

In some examples, the configuration module 10 is implemented as a Central Processing Unit (CPU), and is connected to and configures the input routing module 20, the interconnection routing module 30, and the multiple MAU modules 40 respectively, so as to generate the first configuration data corresponding to the input routing module 20, the second configuration data corresponding to the interconnection routing module 30, and third configuration data corresponding to each of the multiple MAU modules 40. In an embodiment, the corresponding configuration data may be sent to a respective one of the input routing module 20, the interconnection routing module 30, and the multiple MAU modules 40, respectively. In some examples, the first configuration data, the second configuration data, and the third configuration data are control signals for related devices.

In an example, the configuration module 10 may be connected to each MAU module 40 through a separate control signal line, to control each MAU module 40.

In another example, the configuration module 10 may also be connected to each MAU module 40 through a control bus, to control each MAU module 40. The connection overhead is greatly reduced in the controlling manner according to this example.

The input mathematical model refers to a mathematical model inputted to the configuration module for multi-data arithmetic operations, which may be switched or updated according to actual requirements, and has the characteristics of massive data, large bit width and high throughput. For example, some mathematical models require addition of some input data and then multiplication of the results of the addition by the other input data. Some mathematical models require subtraction of some input data and then multiplication of the results of the subtraction by some input data, and addition of the results of the multiplication with the rest of input data. Some mathematical models require multiplication of all input data. Operation characteristics of most mathematical models are basic operations such as multiplication, addition and subtraction between input data, or basic operations such as multiplication, addition and subtraction between input data and constants, or basic operations such as conjugate and inversion of the input data.

Several (such as N) pieces of input data are inputted to a data processing apparatus and from which one piece of output data is outputted. In some examples, N pieces of input data are inputted at the same time, for example, through a data bus for the corresponding arithmetic operation. When N pieces of input data are provided, the number of the MAU module 40 may be N or N-1 or even less, and may be determined according to the computing power of the MAU module, which number is not specifically limited in this embodiment. Since the arithmetic operation is performed between at least two pieces of input data, in order to prevent the existence of idle MAU modules, the number of the MAU module 40 may be set to N-1 as an example, which will be illustrated below.

The MAU module 40 receives data based on the input route established by the input routing module 20 and/or the interconnection route established by the interconnection routing module and then performs arithmetic operations on the received data according to the third configuration data. In some examples, the third configuration data is configured to indicate data selected for arithmetic operations and/or indicate a type of each arithmetic operation. The input route is created by the input routing module 20 and is configured to realize mapping from input data of the data processing apparatus to input data of the MAU module. The interconnection route is created by the interconnection routing module 30 and is configured to realize mapping from output data of one MAU module to input data of another MAU module. It is to be noted that input data of one MAU module 40 may be from the input route alone, or from the interconnection route alone, or from both the input route and the interconnection route.

The MAU module has multiple input interfaces and one output interface. Each input interface is configured to receive input data from the data processing apparatus, or receive output data from another MAU module, or receive constants configured by the configuration module.

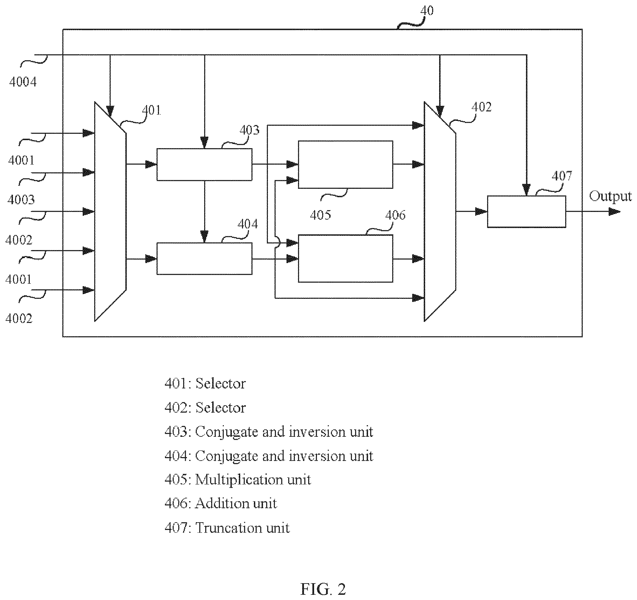

In an example, the MAU module is configured to realize routine arithmetic operations between two pieces of data, such as addition, multiplication, inversion, and conjugate operation. As shown in FIG. 2, the input interface of the MAU module includes two apparatus data input interfaces 4001, two interconnection data input interfaces 4002 and one constant input interface 4003. The apparatus data input interface is configured to receive input data of the data processing apparatus. Each interconnection data input interface is configured to receive output data from a preceding MAU module. The constant input interface is configured to receive constants configured by the configuration module.

In some examples, as shown in FIG. 2, the MAU module further includes a control interface 4004 configured to receive the third configuration data from the configuration module. Then, the MAU module is configured to select, according to the third configuration data from the configuration module, one or two pieces of data from the data received through the input interfaces for arithmetic operations, that is, to select one or two pieces of data from the data received through the two apparatus data input interfaces, and through the two interconnection data input interfaces and through the one constant input interface for the corresponding arithmetic operations.

In an example, the MAU module may include at least one of, a selector, a conjugate and inversion unit, a multiplication unit, an addition unit, or a truncation unit. The conjugate and inversion unit is configured to perform a conjugate operation and/or an inversion operation on data or configured to perform a straight-through operation on the data.

In an example, as shown in FIG. 2, the MAU module 40 includes a selector 401, a selector 402, a conjugate and inversion unit 403, a conjugate and inversion unit 404, a multiplication unit 405, an addition unit 406, and a truncation unit 407.

The selector 401 selects, according to the configuration (i.e., the third configuration data) of the configuration module, one or two pieces of data from 5 pieces of data to pass through. The multiplication unit 405 performs a multiplication arithmetic operation. The addition unit 406 performs an addition arithmetic operation. The conjugate and inversion unit 403 and the conjugate and inversion unit 404 perform, according to the configuration (i.e., the third configuration data) of the configuration module, a conjugate operation and/or an inversion operation or a straight-through operation on the two pieces of data passed from the selector 401. The straight-through operation means no operation is performed on the data inputted into the conjugate and inversion unit. That is, when the conjugate and inversion unit performs a straight-through operation on the passed data, the output data of the operation is exactly the same as the input data. The selector 402 selects, according to the configuration (i.e., the third configuration data) of the configuration module, one piece of data from output data of the multiplication unit 405, output data of the addition unit 406, output data of the conjugate and inversion unit 403 and output data of the conjugate and inversion unit 404 to pass through. In addition, the truncation unit 407 truncates output data of the selector 402 according to the configuration (i.e., the third configuration data) of the configuration module, so as to prevent overflow of operational results during the multi-data arithmetic operation. Finally, the output of the truncation unit 407 is the output of the MAU module.

In this example, the MAU module may perform a combination operation of a conjugate/inversion operation and a multiplication/addition operation on any two pieces of data received, or may also perform a straight-through operation, a conjugate operation, or an inversion operation on any piece of data received.

It is to be noted that the configurations for the selector 401, the selector 402, the conjugate and inversion unit 403, the conjugate and inversion unit 404, and the truncation unit 407 may all be acquired through a control interface 4004 of the MAU module.

In the technical scheme according to this implementation, a serial number is set for each MAU module, and multiple MAU modules are sorted according to the serial numbers, which may be sorted in an ascending order or in descending order. The multiple MAU modules are unidirectionally cascaded based on the interconnection routes established by the interconnection routing module. In the multiple MAU modules, an interconnection route is from an output interface of a preceding MAU module to an input interface of a subsequent MAU module. That is, a data flow direction is from an output interface of a preceding MAU module to an input interface of a subsequent MUA module. The preceding MAU module and the subsequent MAU are relative. The serial sorting number of the preceding MAU module is smaller in value than that of the subsequent MAU module.

That is, data mapping between the MAU modules is unidirectional and asymmetric. The output data of the preceding MAU module may be mapped to the input data of the subsequent MAU module, but the output data of the subsequent preceding MAU module cannot be mapped to the input data of the preceding MAU module.

Then, an overall data flow direction of the data processing apparatus is from the MAU module with a first serial sorting number to the MAU module with a last serial sorting number. For example, the data processing apparatus includes N-1 MAU modules, and the overall data flow direction of the data processing apparatus is from the 1^{st} MAU module to the N-1^{th} MAU module.

The output of each MAU module except the MAU module with the last serial sorting number (e.g., the N-1^{th} MAU module in FIG. 1), is sent to the interconnection routing module to realize a unidirectional cascade between the multiple MAU modules through the interconnection routing module. The output of the MAU module with the last serial sorting number is the final output of the data processing apparatus, and would not to be sent to the interconnection routing module.

The input routing module 20 establishes routes from N input data channels to N-1 MAU modules according to the first configuration data. Each input data channel is configured to receive a piece of input data. The N input data channels may receive N pieces of input data of the data processing apparatus at the same time. The first configuration data is configured to indicate the establishment of a route from an input data channel to an input interface of an MAU module, which may specifically be the establishment of a route from an input data channel to an apparatus data input interface of an MAU module.

In a case where each MAU module is provided with two apparatus data input interfaces, the input routing module 20 is capable of establishing a total of N*2* (N-1) mapping routes from the N input data channels to the N-1 MAU modules.

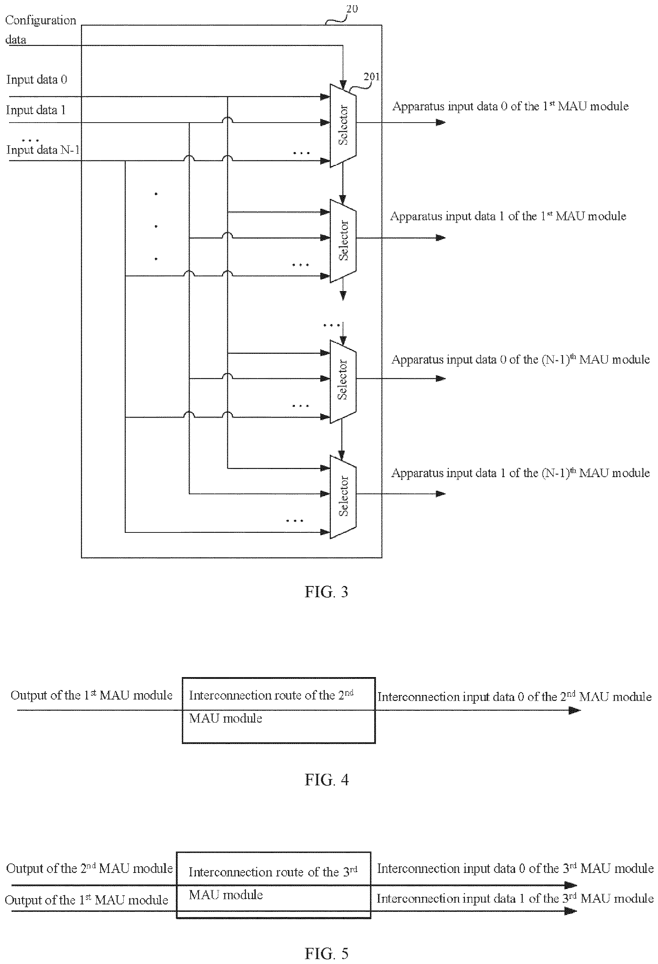

In an example, as shown in FIG. 3, the input routing module 20 includes multiple selectors 201. The selectors 201 are configured to provide routes from multiple input data channels of the data processing apparatus to one of the apparatus data input interfaces of the MAU module. For each selector 201, the input includes configuration data and N pieces of input data, and the output includes input data to an apparatus data input interface of an MAU module. The N-1 MAU modules are provided with a total of 2N-2 apparatus data input interfaces, and the input data channel corresponding to each apparatus data input interface can be configured separately by the configuration module. Then, the input routing module enables the data processing apparatus to realize parallel computation of multiple pieces of input data.

In some examples, for example, the input routing module being configured to establish input routes from multiple input data channels of the data processing apparatus to input interfaces of the multiple MAU modules according to the first configuration data may be as follows.

The input routing module being configured to select, according to the first configuration data, one target input data channel from the multiple input data channels of the data processing apparatus by a selector, and establish a route from the target input data channel to one apparatus data input interface of one of the MAU modules.

As shown in FIG. 3, taking one selector 201 as an example, the selector 201 is capable of establishing a route from any of the N input data channels to an apparatus data input interface of an MAU module connected to the selector 201. In FIG. 3, input data 0 to input data N-1 are the N pieces of input data of the data processing apparatus. Apparatus input data 0 to apparatus input data 1 are the input data of the data processing apparatus received by two apparatus data input interfaces of the MAU modules, respectively.

In an embodiment, the selector 201 selects, according to the configuration of the configuration module, one of the N input data channels as a target input data channel, and establishes a route from the target input data channel to an apparatus data input interface of an MAU module connected to the selector 201.

It is to be noted that, according to the configuration of the configuration module, the selector 201 may not establish a route from any of the N input data channels to an apparatus data input interface of an MAU module connected to the selector 201. In this case, the apparatus data input interface of the MAU module connected to the selector 201 cannot receive the input data of the data processing apparatus.

The interconnection routing module 30 may establish, according to the second configuration data, a route from an output interface of a preceding MAU module in the multiple MAU modules 40 to an input interface of a subsequent MAU module, so as to complete unidirectional and asymmetric mapping from output data of the preceding MAU module to interconnection input data of the subsequent MAU module. In a case where the MAU module can perform arithmetic operations on at most two pieces of data, the subsequent MAU module can select the output of at most two preceding MAU modules for cascading arithmetic operations.

The second configuration data is configured to indicate the establishment of a route from an output interface of a preceding MAU module to an input interface of a subsequent MAU module, which may specifically be the establishment of a route from an output interface of a preceding MAU module to an interconnection data input interface of a subsequent MAU module.

Then, after the input routing module establishes input routes from multiple input data channels to input interfaces of multiple MAU modules according to the configurations of the configuration module and the interconnection routing module establishes interconnection routes from output interfaces of preceding MAU modules to input interfaces of subsequent MAU modules according to the configurations of the configuration module, the multiple MAU modules form a parallel/series hybrid network topology based on the input routes and the interconnection routes.

In the above technical scheme, the configuration module configures the input routing module, the MAU modules and the interconnection routing module according to a supported multi-data arithmetic operation mathematical model, input data of the data processing apparatus and output data of the MAU module can be flexibly mapped to the input data of the corresponding MAU module, and the MAU module performs related operations on the received data, so that the data processing apparatus is capable of multi-data complex arithmetic operations.

In an example, the interconnection routing module is configured to provide an interconnection route from an output interface of a preceding MAU module to an interconnection data input interface of a subsequent MAU module by direct connection and/or a selector; where the serial sorting number of the preceding MAU module is smaller in value than that of the subsequent MAU module.

In the interconnection routing module, input data to a selector is the output data from a preceding MAU module, and output data from the selector is interconnection input data (i.e., input data received through an interconnection data input interface) to a subsequent MAU module. In some examples, in the interconnection routing module, one or more pieces of input data are inputted to the selector and one piece of output data is outputted therefrom. In case only one piece of data is inputted to the selector, that means the selector directly connects the input data and output data.

In an example, in a case where the MAU module can perform arithmetic operations on at most two pieces of data, for the MAU modules numbered and sorted in the first four places, the interconnection routing module is configured to provide the interconnection route from the output interface of a preceding MAU module to the interconnection data input interface of a subsequent MAU module by direct connection. And for the MAU modules except for those numbered and sorted in the first four places, the interconnection routing module is configured to provide the interconnection route from the output interface of the preceding MAU module to the interconnection data input interface of the subsequent MAU module by direct connection and a selector.

An X^{th} MAU module having the serial sorting number of X is taken as an example for illustration. Firstly, X is set to an integer greater than or equal to 0 and less than a total number of the MAU modules.

X-1 MAU modules present upstream in terms of a data flow of the X^{th} MAU module. If an MAU module cascading operation is to be performed between the X MAU modules, the number X-1 may be decomposed by addition of positive integers, for example, X-1=1+(X-2)=2+(X-3)=3+(X-4)= ... =floor(X-1/2)+ceil(X-1/2), where the operator "floor" denotes a round down (i.e., rounding towards negative infinity ) function, and the operator "ceil" denotes a round up (i.e., rounding towards positive infinity) function.

"X-1=1+(X-2)" indicates that the X^{th} MAU module may complete cascading arithmetic operations of "output of 1 MAU module" and "cascaded output of X-2 MAU modules". Since the multiple MAU modules are unidirectionally cascaded, "output of 1 MAU module" and "cascaded output of X-2 MAU modules" correspond to the output of an (X-1)^{th} MAU module and the output of an (X-2)^{th} MAU module respectively. Therefore, "X-1=1+(X-2)" indicates that the X^{th} MAU module may complete cascading arithmetic operations of "output of the (X-1)^{th} MAU module" and "output of the (X-2)^{th} MAU module".

"X-1=2+(X-3)" indicates that the X^{th} MAU module may complete cascading arithmetic operations of "cascaded output of 2 MAU modules" and "cascaded output of X-3 MAU modules". Since the multiple MAU modules are unidirectionally cascaded, "cascaded output of 2 MAU modules" and "cascaded output of X-3 MAU modules" correspond to the output of the (X-1)^{th} MAU module and the output of the (X-3)^{th} MAU module respectively. Therefore, "X-1=2+(X-3)" indicates that the X^{th} MAU module may complete cascading arithmetic operations of "output of the (X-1)^{th} MAU module" and "output of the (X-3)^{th} MAU module".

In a similar manner, "X-1= floor((X-1)/2)+ceil((X-1)/2)" indicates that the X^{th} MAU module may complete cascading arithmetic operations of "cascaded output of floor((X-1)/2) MAU modules" and "cascaded output of ceil((X-1)/2) MAU modules". Since the multiple MAU modules are unidirectionally cascaded, "cascaded output of floor((X-1)/2) MAU modules" and "cascaded output of ceil((X-1)/2) MAU modules" correspond to the output of the (X-1)^{th} MAU module and the output of the ceil((X-1)/2)^{th} MAU module respectively. Therefore, "X-1= floor((X-1)/2)+ceil((X-1)/2)" indicates that the X^{th} MAU module may complete cascading arithmetic operations of "output of the (X-1)^{th} MAU module" and "output of the ceil((X-1)/2)^{th} MAU module".

Based on the above, preceding MAU modules of the X^{th} MAU module include a fixed (X-1)^{th} MAU module and a module selected from one of (X-2)^{th} MAU module, (X-3)^{th} MAU module, ..., and ceil((X-1)/2)^{th} MAU module. Therefore, the interconnection routing module does not need to provide routes from the 1^{st} MAU module, the 2^{nd} MAU module, ... and the (ceil((X-1)/2)-1)^{th} MAU module to the X^{th} MAU module, so as to reduce interconnection routing overhead.

For the MAU modules numbered and sorted in the first four places, i.e., the 1^{st} MAU module to the 4^{th} MAU module, the four MAU modules are numbered and sorted on the top and are special.

The 1^{st} MAU module is the first MAU module in the data MAU module and has no preceding MAU module.

The preceding MAU module of the 2^{nd} MAU module has and only has the 1^{st} MAU module.

The preceding MAU module of the 3^{rd} MAU module has and only has the 1^{st} MAU module and the 2^{nd} MAU module.

The 4^{th} MAU module has 3 preceding MAU modules, which are the 1^{st} MAU module, the 2^{nd} MAU module and the 3^{rd} MAU module respectively. However, when X=4, X-2= ceil((X-1)/2)=2. Therefore, it may be considered that the 3^{rd} (i.e., X-1) MAU module and the 2^{nd} MAU module are the preceding MAU modules, and the 1^{st} MAU module is not a preceding MAU module. There is no need to consider the route from the output of the 1^{st} MAU module to the input of the 4^{th} MAU module in the interconnection route.

Then, for the MAU modules numbered and sorted in the first four places, the interconnection routes can be realized by just a direct connection, i.e., by a connection line. The interconnection routes have only connection overhead and no selector overhead.

Referring to FIG. 4, FIG. 5 and FIG. 6, in an example, for the MAU modules numbered and sorted in the first four places, the interconnection routing module being configured to provide the interconnection route from the output interface of the preceding MAU module to the interconnection data input interface of the subsequent MAU module by direct connection may be as follows.

The interconnection routing module being further configured to provide, by direct connection, an interconnection route from an output interface of the 1^{st} MAU module to an interconnection data input interface of the 2^{nd} MAU module, an interconnection route from the output interface of the 1^{st} MAU module and an output interface of the 2^{nd} MAU module to an interconnection data input interface of the 3^{rd} MAU module, and an interconnection route from the output interface of the 2^{nd} MAU module and an output interface of the 3^{rd} MAU module to an interconnection data input interface of the 4^{th} MAU module.

That is, the interconnection route of the 2^{nd} MAU module is a route from the output of the 1^{st} MAU module to the interconnection input data 0 (or interconnection input data 1) of the 2^{nd} MAU module. The interconnection route of the 3^{rd} MAU module is a route from the output of the 2^{nd} MAU module to the interconnection input data 0 of the 3^{rd} MAU module and a route from the output of the 1^{st} MAU module to the interconnection input data 1 of the 3^{rd} MAU module. The interconnection route of the 4^{th} MAU module is a route from the output of the 3^{rd} MAU module to the interconnection input data 0 of the 4^{th} MAU module and a route from the output of the 2^{nd} MAU module to the interconnection input data 1 of the 4^{th} MAU module.

The interconnection input data 1 and the interconnection input data 0 are input data received by the two interconnection data input interfaces of the MAU module.

For the MAU modules except for those numbered and sorted in the first four places, i.e., other MAU modules after the 4^{th} MAU module, the X^{th} MAU module is still taken as an example to represent one of the MAU modules. In this case, X is a natural number greater than 4 and less than or equal to a total number of the MAU modules (N-1). That is, 4<X≤N-1.

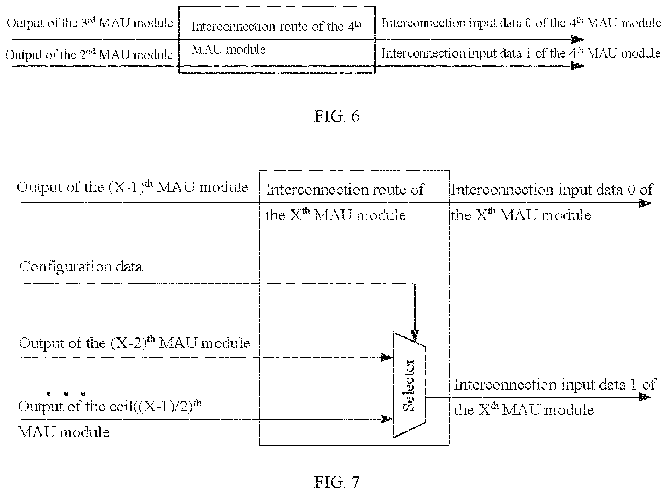

Referring to FIG. 7, in an example, for the MAU modules other than those numbered and sorted in the first four places, the interconnection routing module being configured to provide the interconnection route from the output interface of the preceding MAU module to the interconnection data input interface of the subsequent MAU module by direct connection and a selector may be as follows.

The interconnection routing module being configured to provide an interconnection route from output interfaces from the (X-2)^{th} MAU module to the ceil((X-1)/2)^{th} MAU module, to one interconnection data input interface of the X^{th} MAU module by a selector; and provide an interconnection route from an output interface of the (X-1)^{th} MAU module to the other interconnection data input interface of the X^{th} MAU module by direct connection.

Output interfaces of the (X-2)^{th} MAU module, the (X-3)^{th} MAU module, ... and the ceil((X-1)/2)^{th} MAU module are connected to a selector configured by the configuration module, and the output of the selector is directly connected to one interconnection data input interface of the X^{th} MAU module. The output interface of the (X-1)^{th} MAU module is fixedly and directly connected to the other interconnection data input interface of the X^{th} MAU module.

That is, the interconnection route of the X^{th} MAU module is a route from the output of any one of the (X-2)^{th} MAU module, the (X-3)^{th} MAU module, ... and the ceil((X-1)/2)^{th} MAU module to the interconnection input data 1 of the X^{th} MAU module and a route from the output of the (X-1)^{th} MAU module to the interconnection input data 0 of the X^{th} MAU module.

In some examples, the interconnection routing module being configured to establish, according to the second configuration data, an interconnection route from an output interface of a preceding MAU module in the multiple MAU modules to an input interface of a subsequent MAU module may be as follows.

The interconnection routing module being configured to select, according to the second configuration data, a target MAU module from the (X-2)^{th} MAU module to the ceil((X-1)/2)^{th} MAU module by a selector, and establish an interconnection route from an output interface of the target MAU module to one interconnection data input interface of the X^{th} MAU module.

The selector corresponding to the X^{th} MAU module, selects, according to the second configuration data, one from the (X-2)^{th} MAU module, the (X-3)^{th} MAU module, ... and the ceil((X-1)/2)^{th} MAU module to be connected to one interconnection data input interface of the X^{th} MAU module.

In the above technical scheme, from the 5^{th} MAU module to the (N-1)^{th} MAU module, the selector overhead of each MAU module is 1 selected from (X-2-ceil((X-1)/2)), and then the selector overhead in the interconnection routing module has an order of magnitude of N^2/4. If the existing full mapping scheme is applied for the interconnection routing module, each MAU module selects any 2 of the other N-2 multiple MAU modules to perform a cascading operation. The selector overhead of each MAU module is 1 selected from 2*(N-2). The selector overhead of N-1 MAU modules is selector resources of 1 selected from (N-1)*2*(N-2) and has an order of magnitude of 2^{∗}N^2. The selector overhead of the interconnection routing module according to the embodiments of the present application is much lower as compared to that of the full mapping scheme.

The interconnection routing module according to the implementation of the present application does not have redundant forwarding MAU modules that do not perform practical arithmetic operations, data transmission between the MAU modules is also higher than that of the interconnection routing based on bus sharing, and the interconnection overhead is lower than that of the fully mapped routing, which strikes a balance between the operation efficiency, data transmission efficiency and interconnection overhead of the operational units.

In the technical scheme according to the implementations of the present application, the data processing apparatus can perform flexible and complex arithmetic operations on multiple pieces of apparatus input data, and can meet the requirements of multi-data arithmetic operations on switching and updating of the mathematical model. At the same time, the interconnection routing module in the data processing apparatus establishes, according to the configuration of the configuration module, an interconnection route from an output interface of a preceding MAU module in the multiple MAU modules to an input interface of a subsequent MAU module based on serial sorting numbers of the multiple MAU modules, so as to achieve unidirectional cascade of the multiple MAU modules, instead of bidirectional cascade, thereby reducing the interconnection routing overhead. Moreover, the data processing apparatus does not have redundant forwarding MAU modules that do not perform practical arithmetic operations, and data transmission between the MAU modules is also higher than that of the interconnection routing based on bus sharing. Therefore, when performing complex arithmetic operations on multiple pieces of input data, the data processing apparatus according to the embodiments of the present application can strike a balance between the operation efficiency, data transmission efficiency and interconnection overhead of the operational units.

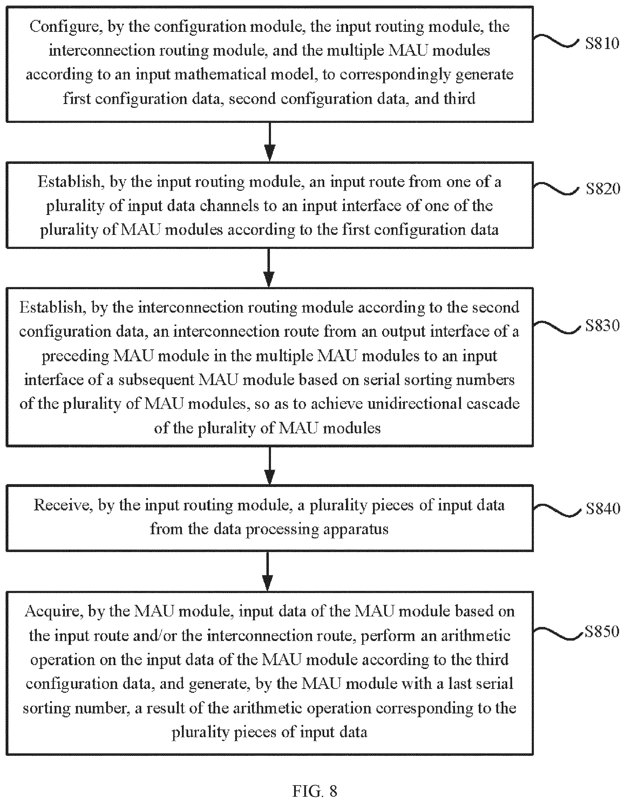

In an implementation, FIG. 8 is a schematic flowchart of a data processing method according to an embodiment of the present application. The method is suitable for flexible and complex arithmetic operations on multiple pieces of input data. The method may be performed by the data processing apparatus according to any one of the implementations of the present application.

As shown in FIG. 8, the data processing method according to the embodiment of the present application is performed by the data processing apparatus according to any one of the implementations of the present application. The method may include the following S810 to S850.

At S810, the input routing module, the interconnection routing module, and the multiple MAU modules are configured by the configuration module according to an input mathematical model, to correspondingly generate first configuration data, second configuration data, and third configuration data.

At S820, input routes from multiple input data channels to input interfaces of the multiple MAU modules are established by the input routing module according to the first configuration data.

At S830, an interconnection route from an output interface of a preceding MAU module in the multiple MAU modules to an input interface of a subsequent MAU module is established by the interconnection routing module according to the second configuration data and based on serial sorting numbers of the multiple MAU modules, so as to achieve unidirectional cascade of the multiple MAU modules.

At S840, multiple pieces of input data from the data processing apparatus are received by the input routing module.

After the configuration module completes related configurations, the data processing apparatus may receive input data through the input routing module.

At S850, input data of the MAU module is acquired by the MAU module based on the input route and/or the interconnection route, and arithmetic operations are performed on the input data of the MAU module according to the third configuration data, and arithmetic operation results corresponding to the multiple pieces of input data are generated by the MAU module with the last serial sorting number.

In an example, the MAU module includes at least one of the following: a selector, a conjugate and inversion unit, a multiplication unit, an addition unit, and a truncation unit. The conjugate and inversion unit is configured to perform a conjugate operation and/or an inversion operation on data or configured to perform a straight-through operation on the data.

In an example, the input interface of the MAU module includes: two apparatus data input interfaces each configured to receive input data from the data processing apparatus. The input interface of the MAU module includes two interconnection data input interfaces each configured to receive output data of the preceding MAU module. The input interface of the MAU module further includes a constant input interface configured to receive a constant configured by the configuration module. The MAU module is configured to perform, according to the third configuration data, arithmetic operations on one piece or two pieces of data selected from the data received through the input interface.

Correspondingly, when configuring the input routing module, the interconnection routing module, and the multiple MAU modules according to an input mathematical model, the configuration module configures selectors in the input routing module according to the input mathematical model to realize configuration of an input route from the 1^{st} MAU module to the (N-1)^{th} MAU module; configures selectors in the interconnection routing module according to the input mathematical model to realize configuration of an interconnection route from the 5^{th} MAU module to the (N-1)^{th} MAU module; and performs related configuration on each MAU module according to the input mathematical model.

In case the input mathematical model includes a constant, the configuration module further inputs the constant in the input mathematical model into the corresponding MAU module.

In some examples, the input routing module includes multiple selectors configured to provide input routes from multiple input data channels of the data processing apparatus to one apparatus data input interface of the MAU modules.

In some examples, the input routing module selects, according to the first configuration data, one target input data channel from the multiple input data channels of the data processing apparatus by a selector, and establishes an input route from the target input data channel to one apparatus data input interface of one MAU module.

In an example, the interconnection routing module provides an interconnection route from an output interface of a preceding MAU module to an interconnection data input interface of a subsequent MAU module by direct connection and/or a selector, where the serial sorting number of the preceding MAU module is smaller in value than that of the subsequent MAU module.

In some examples, in a case where the MAU module processes at most two pieces of data, for the MAU modules numbered and sorted in the first four places, the interconnection routing module provides the interconnection route from the output interface of the preceding MAU module to the interconnection data input interface of the subsequent MAU module by direct connection; and for the MAU modules except for those numbered and sorted in the first four places, the interconnection routing module provides the interconnection route from the output interface of the preceding MAU module to the interconnection data input interface of the subsequent MAU module by direct connection and a selector.

In some examples, the interconnection routing module provides, by direct connection, an interconnection route from an output interface of the 1^{st} MAU module to an interconnection data input interface of the 2^{nd} MAU module, an interconnection route from the output interface of the 1^{st} MAU module and an output interface of the 2^{nd} MAU module to an interconnection data input interface of the 3^{rd} MAU module, and an interconnection route from the output interface of the 2^{nd} MAU module and an output interface of the 3^{rd} MAU module to an interconnection data input interface of the 4^{th} MAU module.

The interconnection routing module provides an interconnection route from output interfaces of the (X-2)^{th} MAU module to the ceil((X-1)/2)^{th} MAU module to one interconnection data input interface of the X^{th} MAU module by a selector; and provides an interconnection route from an output interface of the (X-1)^{th} MAU module to the other interconnection data input interface of the X^{th} MAU module by direct connection.

Number X is a natural number greater than 4 and less than or equal to a total number of the MAU modules, and operator "ceil" denotes a round up function.

In some examples, the interconnection routing module selects, according to the second configuration data, a target MAU module from the (X-2)^{th} MAU module to the ceil((X-1)/2)^{th} MAU module by a selector, and establishes an interconnection route from an output interface of the target MAU module to one interconnection data input interface of the X^{th} MAU module.

Please refer to the embodiments as described above for details not illustrated in this implementation, and which details will not be repeated here.

In the above technical scheme, the data processing apparatus can perform flexible and complex arithmetic operations on multiple pieces of apparatus input data, and can meet the requirements of multi-data arithmetic operations on switching and updating of the mathematical model. At the same time, the interconnection routing module in the data processing apparatus establishes, according to the configuration of the configuration module, an interconnection route from an output interface of a preceding MAU module in the multiple MAU modules to an input interface of a subsequent MAU module based on serial sorting numbers of the multiple MAU modules, so as to achieve unidirectional cascade of the multiple MAU modules, instead of bidirectional cascade, thereby reducing the interconnection routing overhead. Moreover, the data processing apparatus does not have redundant forwarding MAU modules that do not perform practical arithmetic operations, and data transmission between the MAU modules is also higher than that of the interconnection routing based on bus sharing. Therefore, when performing complex arithmetic operations on multiple pieces of input data, the data processing apparatus according to the embodiment of the present application can strike a balance between the operation efficiency, data transmission efficiency and interconnection overhead of the operational units.

The above are only some embodiments of the present application and are not intended to limit the protection scope of the present application.

In general, embodiments of the present application may be implemented in hardware or dedicated circuits, software, logic, or any combination thereof. For example, some aspects may be implemented in hardware while other aspects may be implemented in firmware or software that may be executed by a controller, a microprocessor, or other computing apparatuses, although the present application is not limited thereto.

Embodiments of the present application may be implemented by computer program instructions executed by a data processor of a mobile apparatus, for example, in a processor entity, may be implemented by hardware, or may be implemented by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow in the drawings of the present application may represent program steps, may represent interconnected logic circuits, modules, and functions, or may represent a combination of program steps, logic circuits, modules, and functions. Computer programs may be stored in a memory. The memory may be of any type suitable for a local technical environment and may be implemented using any suitable data storage technology, such as, but not limited to, a read-only memory (ROM), a random access memory (RAM), an optical memory device and system (digital versatile disc (DVD) or compact disk (CD)), etc. A computer-readable medium may include a non-instantaneous storage medium. The data processor may be of any type suitable for the local technical environment such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

A detailed description of exemplary embodiments of the present application has been provided above through demonstrative and non-restrictive examples. However, in consideration of the drawings and claims, various modifications and adjustments to the above embodiments are obvious to those skilled in the art, without departing from the scope of the present application. Accordingly, the proper scope of the present application will be defined by the claims.

## Claims

1. A data processing apparatus, comprising: a configuration module, an input routing module, an interconnection routing module, and a plurality of multiply and accumulate unit (MAU) modules, wherein,
the configuration module is configured to configure the input routing module, the interconnection routing module, and the plurality of MAU modules according to an input mathematical model, to correspondingly generate first configuration data, second configuration data, and third configuration data;
the input routing module is configured to establish an input route from one of a plurality of input data channels of the data processing apparatus to an input interface of one of the plurality of MAU modules according to the first configuration data;
the interconnection routing module is configured to establish, according to the second configuration data, an interconnection route from an output interface of a preceding MAU module in the plurality of MAU modules to an input interface of a subsequent MAU module, based on serial sorting numbers of the plurality of MAU modules, so as to achieve unidirectional cascade of the plurality of MAU modules; and
the MAU module is configured to acquire input data of the MAU module through the input route and/or the interconnection route, and perform an arithmetic operation on the input data of the MAU module according to the third configuration data.

2. The apparatus of claim 1, wherein,
the input interface of the MAU module comprises: two apparatus data input interfaces each configured to receive input data from the data processing apparatus;
the input interface of the MAU module comprises: two interconnection data input interfaces each configured to receive output data from a preceding MAU module;
the input interface of the MAU module further comprises: a constant input interface configured to receive a constant configured by the configuration module; and
the MAU module is further configured to perform, according to the third configuration data, an arithmetic operation on one piece or two pieces of data selected from data received through the input interface.

3. The apparatus of claim 2, wherein the interconnection routing module is further configured to provide an interconnection route from an output interface of a preceding MAU module to an interconnection data input interface of a subsequent MAU module by direct connection and/or a selector; and wherein a serial sorting number of the preceding MAU module is smaller in value than a serial sorting number of the subsequent MAU module.

4. The apparatus of claim 3, wherein,
for MAU modules numbered and sorted in first four places, the interconnection routing module is configured to provide the interconnection route from the output interface of the preceding MAU module to the interconnection data input interface of the subsequent MAU module by direct connection; and
for the MAU modules except for those numbered and sorted in the first four places, the interconnection routing module is configured to provide the interconnection route from the output interface of the preceding MAU module to the interconnection data input interface of the subsequent MAU module by direct connection and a selector.

5. The apparatus of claim 4, wherein for the MAU modules numbered and sorted in the first four places, the interconnection routing module being configured to provide the interconnection route from the output interface of the preceding MAU module to the interconnection data input interface of the subsequent MAU module by direct connection comprises:
the interconnection routing module being configured to provide, by direct connection, an interconnection route from an output interface of a 1^{st} MAU module to an interconnection data input interface of a 2^{nd} MAU module, an interconnection route from the output interface of the 1^{st} MAU module and an output interface of the 2^{nd} MAU module to an interconnection data input interface of a 3^{rd} MAU module, and an interconnection route from the output interface of the 2^{nd} MAU module and an output interface of the 3^{rd} MAU module to an interconnection data input interface of a 4^{th} MAU module.

6. The apparatus of claim 4, wherein for the MAU modules except for those numbered and sorted in the first four places, the interconnection routing module being configured to provide the interconnection route from the output interface of the preceding MAU module to the interconnection data input interface of the subsequent MAU module by direct connection and a selector comprises:
the interconnection routing module being configured to provide an interconnection route from an output interface of an MAU module selected from a (X-2)^{th} MAU module to a ceil((X-1)/2)^{th} MAU module, to one of the interconnection data input interfaces of an X^{th} MAU module by a selector; and provide an interconnection route from an output interface of a (X-1)^{th} MAU module to the other one of the interconnection data input interfaces of the X^{th} MAU module by direct connection; and
wherein X is a natural number greater than 4 and less than or equal to a total number of the MAU modules, and ceil denotes a round up function.

7. The apparatus of claim 6, wherein the interconnection routing module being configured to establish, according to the second configuration data, an interconnection route from an output interface of a preceding MAU module in the plurality of MAU modules to an input interface of a subsequent MAU module based on the serial sorting numbers of the plurality of MAU modules comprises:
the interconnection routing module being configured to select, according to the second configuration data, a target MAU module from the (X-2)^{th} MAU module to the ceil((X-1)/2)^{th} MAU module by a selector, and establish an interconnection route from an output interface of the target MAU module to one of the interconnection data input interfaces of the X^{th} MAU module.

8. The apparatus of claim 1 or claim 2, wherein each MAU module comprises at least one of, a selector, a conjugate and inversion unit, a multiplication unit, an addition unit, or a truncation unit, wherein the conjugate and inversion unit is configured to perform a conjugate operation and/or an inversion operation on data or configured to perform a straight-through operation on data.

9. The apparatus of claim 2, wherein the input routing module comprises a plurality of selectors each configured to provide an input route from one of the plurality of input data channels of the data processing apparatus to an apparatus data input interface of one of the plurality of MAU modules.

10. The apparatus of claim 9, wherein the input routing module being configured to establish an input route from one of the plurality of input data channels of the data processing apparatus to an input interface of one of the plurality of MAU modules according to the first configuration data comprises:
the input routing module being configured to select, according to the first configuration data, one target input data channel from the plurality of input data channels of the data processing apparatus by a selector, and establish an input route from the target input data channel to an apparatus data input interface of one of the plurality of MAU modules;

11. A data processing method, performed by the data processing apparatus of any one of claims 1 to 10, comprising:
configuring, by the configuration module, the input routing module, the interconnection routing module, and the plurality of MAU modules according to an input mathematical model, to correspondingly generate first configuration data, second configuration data, and third configuration data;
establishing, by the input routing module, an input route from one of the plurality of input data channels to an input interface of one of the plurality of MAU modules according to the first configuration data;
establishing, by the interconnection routing module according to the second configuration data, an interconnection route from an output interface of a preceding MAU module in the plurality of MAU modules to an input interface of a subsequent MAU module based on serial sorting numbers of the plurality of MAU modules, so as to achieve unidirectional cascade of the plurality of MAU modules;
receiving, by the input routing module, a plurality pieces of input data from the data processing apparatus; and
acquiring, by the MAU module, input data of the MAU module based on the input route and/or the interconnection route, performing an arithmetic operation on the input data of the MAU module according to the third configuration data, and generating, by the MAU module with a last serial sorting number, a result of the arithmetic operation corresponding to the plurality pieces of input data.
